# EUROPEAN PATENT APPLICATION

(11) **EP 4 748 901 A1**
(43) Date of publication of application: **27.05.2026**
(21) Application number: 24842960.7
(22) Date of filing: 04.07.2024
(51) Int. Cl.: C09J 175/04, B32B 27/00, C08G 18/10, C09J 11/04, C09J 11/06

(54) **POLYISOCYANATE COMPOSITION, TWO-COMPONENT CURABLE COMPOSITION, TWO-COMPONENT CURABLE COATING AGENT, TWO-COMPONENT CURABLE ADHESIVE, LAMINATE, AND PACKAGING MATERIAL**

(30) Priority: 20.07.2023 JP 2023118175
(71) Applicant: DIC Corporation, Tokyo 174-8520 (JP)
(72) Inventor: TESHIMA, Tsuneyuki, Tokyo 174-8520 (JP); NERI MARI, Matteo, 20063 Cernusco sul Naviglio (IT); CHIAPPA, Christian, 20063 Cernusco sul Naviglio (IT); DEMARTINI, Marco, 20063 Cernusco sul Naviglio (IT)
(74) Representative: Kraus & Lederer PartGmbB
(86) International application number: PCT/JP2024/024249
(87) International publication number: WO 2025/018167

(57) **Abstract**

To provide a two-component curable adhesive having an excellent balance between reactivity and storage stability, and a polyisocyanate composition suitable for such an adhesive. The present invention provides a polyisocyanate composition (X) containing: a polyurethane polyisocyanate (A1), which is a reaction product of hexamethylene diisocyanate and a polyol having 5 or more and 10 or less hydroxy groups; and a phosphoric acid derivative (B), in which the phosphoric acid derivative (B) has a content of 10 ppm or more and 5,000 ppm or less, and a two-component curable adhesive containing such a polyisocyanate composition (X).

## Description

### TECHNICAL FIELD

The present invention relates to a polyisocyanate composition, a two-component curable composition, a two-component curable coating agent, a two-component curable adhesive, a laminate, and a packaging material.

### BACKGROUND ART

A laminate for use in various packaging materials, labels, and the like is provided with design properties, functionality, preservability, convenience, transportability, and the like by laminating substrates such as various plastic films, metal foils, and paper. A packaging material obtained by forming the laminate into a bag shape is used as a packaging material in various fields such as foods, pharmaceuticals, and detergents.

In the related art, a laminate film is mainly obtained by a dry lamination method in which a film is coated with a two-component curable adhesive obtained by dissolving a polyisocyanate compound and a polyol compound in a volatile organic solvent, the organic solvent is volatilized in the process of passing through an oven, and another film is bonded thereto. In addition, in recent years, from the viewpoint of reducing the environmental load and improving the working environment, a two-component curable solventless adhesive in which a polyisocyanate compound and a polyol compound do not contain a volatile organic solvent has attracted attention (PTL 1 and PTL 2).

### CITATION LIST

### PATENT LITERATURE

PTL 1: JP2014-159548A
PTL 2: JP2001-172602A

### SUMMARY OF INVENTION

### TECHNICAL PROBLEM

In order to improve the productivity, improvement in reactivity of such a two-component curable adhesive is required. On the other hand, the polyisocyanate compound, which is a component of the two-component curable adhesive, reacts with moisture in the air, and therefore, when the reactivity is too high, the storage stability may decrease. In addition, when the reaction rapidly proceeds immediately after mixing the two components, the adhesion between an adherend member and the adhesive tends to decrease.

The present invention has been made in view of such circumstances, and an object thereof is to provide a two-component curable adhesive having an excellent balance between reactivity and storage stability, and a polyisocyanate composition suitable for such an adhesive.

### SOLUTION TO PROBLEM

That is, the present invention relates to a polyisocyanate composition (X) containing: a polyurethane polyisocyanate (A1), which is a reaction product of hexamethylene diisocyanate and a polyol having 5 or more and 10 or less hydroxy groups; and a phosphoric acid derivative (B), in which the phosphoric acid derivative (B) has a content of 10 ppm or more and 5,000 ppm or less, and a two-component curable adhesive containing such a polyisocyanate composition (X).

### ADVANTAGEOUS EFFECTS OF INVENTION

According to the present invention, it is possible to provide a two-component curable adhesive having an excellent balance between reactivity and storage stability, and a polyisocyanate composition suitable for such an adhesive.

### DESCRIPTION OF EMBODIMENTS

### <Polyisocyanate Composition (X)>

### (Polyurethane Polyisocyanate (A1))

A polyisocyanate composition (X) according to the present invention contains a polyurethane polyisocyanate (A1), which is a reaction product of hexamethylene diisocyanate and a polyol having 5 or more and 10 or less, and more preferably 5 or more and 8 or less hydroxy groups.

Examples of the polyol having 5 or more and 10 or less hydroxy groups for use in the synthesis of the polyurethane polyisocyanate (A1) include low molecular weight polyols having 5 or more and 10 or less hydroxy groups such as xylitol, triglycerol, sorbitol, dipentaerythritol, mannitol, sucrose, and a polyglycerol, and polyether polyols obtained by addition polymerization of an alkylene oxide such as ethylene oxide, propylene oxide, butylene oxide, styrene oxide, epichlorohydrin, tetrahydrofuran, and cyclohexylene using these low molecular weight polyols as an initiator. One or two or more kinds of these can be used in combination.

Since a flexible coating film can be formed and, for example, when the polyisocyanate composition (X) according to the present invention is used as a two-component curable adhesive to be described later, the adhesive can be made more excellent in adhesiveness, it is preferable to use a polyglycerin having 5 or more and 10 or less hydroxy groups or a polyether polyol obtained by addition polymerization of an alkylene oxide with a low molecular weight polyol having 5 or more and 10 or less hydroxy groups, it is preferable to use at least one selected from a polyglycerin having 5 or more and 10 or less hydroxy groups and a polyether polyol obtained by addition polymerization of at least one selected from ethylene oxide, propylene oxide, butylene oxide, and tetrahydrofuran with sorbitol, and it is preferable to use at least one selected from a polyglycerin having 5 or more and 10 or less hydroxy groups and a polyether polyol obtained by addition polymerization of at least one selected from ethylene oxide and propylene oxide with sorbitol.

The polyol to be used has a molecular weight of preferably 200 g/mol or more and 3,000 g/mol or less, preferably 400 g/mol or more and 3,000 g/mol or less, and still more preferably 440 g/mol or more and 2,000 g/mol or less.

The polyurethane polyisocyanate (A1) is obtained by reacting the hexamethylene diisocyanate and the polyol under the condition that the isocyanate group in the hexamethylene diisocyanate is excessive with respect to the hydroxy group in the polyol. The equivalent ratio [NCO]/[hydroxy group] of the isocyanate group to the hydroxy group may be appropriately adjusted, and is, for example, 2.0 or more and 20.0 or less.

In the polyisocyanate composition (X) for use in the present invention, the content of a diisocyanate monomer, that is, a diisocyanate monomer such as an aromatic diisocyanate, an araliphatic diisocyanate, an aliphatic diisocyanate, or an alicyclic diisocyanate exemplified as a raw material of an isocyanate derivative (A3) to be described later, is preferably reduced to 1.0 mass% or less, and more preferably reduced to 0.1 mass% or less.

From the viewpoint of industrial safety and health, there is a movement to regulate the use of an isocyanate monomer, and the European Commission has adopted the REACH regulation of banning products containing 0.1 mass% or more of the isocyanate monomer from being marketed unless certain requirements are satisfied. When the unreacted diisocyanate monomer is removed until the amount of the diisocyanate monomer in the polyisocyanate composition is 0.1 mass% or less, a product satisfying such a regulation can be obtained.

In addition, in the case of producing a laminate for food packaging using a two-component curable adhesive containing an aromatic diisocyanate as a raw material as the isocyanate derivative (A3) to be described later with a considerable amount of the aromatic diisocyanate remaining, the unreacted aromatic isocyanate monomer may remain in an adhesive layer. The isocyanate monomer reacts with water present around to form a primary aromatic amine (PAA), which may move through a film to elute into the content (food). There is a concern that the PAA is harmful to the human body, and various regulations such as the determination of the detection limit of the PAA issued by the European Commission in the rules regarding plastic materials and products for food contact are provided.

Since the PAA reacts with the unreacted aromatic isocyanate present therearound, the concentration of the PAA gradually decreases even in the case where the aromatic isocyanate remains in the adhesive layer. The concentration of the PAA will eventually fall below the detection limit, but from the viewpoint of the production efficiency of the laminate for food packaging, the initial amount of the aromatic isocyanate monomer remaining in the adhesive layer is preferably low. By removing the diisocyanate monomer in advance, a two-component curable adhesive having excellent production efficiency can be obtained.

The diisocyanate monomer can be removed by using a method of distilling the diisocyanate monomer under a reduced pressure using a short pass distillation apparatus, a thin film distillation apparatus, or the like. The degree of pressure reduction and the distillation temperature are appropriately adjusted depending on the diisocyanate monomer to be removed, and are, for example, 0.1 mbar or less and 120°C to 190°C. The step of removing the diisocyanate monomer may be performed a plurality of times.

The content of the diisocyanate monomer can be measured, for example, by gas chromatography using an internal standard in accordance with ASTM D 3432. Alternatively, the content of the diisocyanate monomer can also be measured by liquid chromatography under the following conditions.
Apparatus: "ACQUITY UPLC H-Class" manufactured by Waters Corporation
Data processing: "Empower-3" manufactured by Waters Corporation
Column: "ACQUITY UPLC HSS T3" (100 mm × 2.1 mm φ, 1.8 µm), 40°C, manufactured by Waters Corporation
Eluent: ammonium formate aqueous solution/methanol, 0.3 mL/min
Detector: PDA
Preparation of sample: 1. 100 mg of appropriately blocked sample is dissolved in 10 ml of THF (for LC),
2. the mixture is stirred by vortex for 30 seconds,
3. the resultant is appropriately diluted with an eluent (mobile phase), and
4. the resultant was passed through a 0.2 µm filtration filter to prepare a measurement sample.

Calculation of area ratio: the area ratio is calculated using the maximum absorption wavelength for a target product.

### (Polyurethane Polyisocyanate (A2))

The polyisocyanate composition (X) preferably contains a polyurethane polyisocyanate (A2), which is a reaction product of hexamethylene diisocyanate and a bifunctional polyol. Accordingly, the polyisocyanate composition (X) having a more excellent balance of reactivity, storage stability, and coatability can be obtained. In addition, when the polyisocyanate composition (X) is used as a two-component curable composition to be described later, a coating film having appropriate flexibility can be formed, and the adhesion to a substrate in the case where the polyisocyanate composition (X) is applied to a substrate having flexibility can be improved.

Examples of the bifunctional polyol for use in the synthesis of the polyurethane polyisocyanate (A2) include aliphatic diols such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol, and polyether diols obtained by addition polymerization of an alkylene oxide such as ethylene oxide, propylene oxide, butylene oxide, styrene oxide, epichlorohydrin, tetrahydrofuran, and cyclohexylene using these aliphatic diols as an initiator. One or two or more kinds of these can be used in combination.

The bifunctional polyol has a molecular weight of, for example, 8,000 g/mol or less. It is more preferably 100 g/mol or more and 4,000 g/mol or less.

In the case where the polyisocyanate composition (X) contains the polyurethane polyisocyanate (A2), the blending amount thereof can be appropriately adjusted, and for example, the content of the polyurethane polyisocyanate (A1) in the total amount of the polyurethane polyisocyanate (A1) and the polyurethane polyisocyanate (A2) is preferably 40 mass% or more.

In the case where the polyisocyanate composition (X) contains the polyurethane polyisocyanate (A2), the polyurethane polyisocyanate (A1) and the polyurethane polyisocyanate (A2) may be separately synthesized and mixed, or a mixture of the polyurethane polyisocyanate (A1) and the polyurethane polyisocyanate (A2) may be obtained by reacting hexamethylene diisocyanate, a polyol having 5 or more and 10 or less hydroxy groups, and a bifunctional polyol under the condition that the isocyanate group in the hexamethylene diisocyanate is excessive with respect to the hydroxy group in the polyol, and then removing the unreacted diisocyanate monomer as necessary. The equivalent ratio [NCO]/[hydroxy group] of the isocyanate group to the hydroxy group may be appropriately adjusted, and is, for example, 2.0 or more and 20.0 or less.

In the case of separately synthesizing the polyurethane polyisocyanate (A2), the polyurethane polyisocyanate (A2) is obtained by reacting hexamethylene diisocyanate and a bifunctional polyol under the condition that the isocyanate group in the hexamethylene diisocyanate is excessive with respect to the hydroxy group in the bifunctional polyol, and then removing the unreacted diisocyanate monomer as necessary. The equivalent ratio [NCO]/[hydroxy group] of the isocyanate group to the hydroxy group may be appropriately adjusted, and is, for example, 2.0 or more and 20.0 or less.

### (Isocyanate Derivative (A3))

The polyisocyanate composition (X) may contain the isocyanate derivative (A3) other than the polyurethane polyisocyanate (A1) and the polyurethane polyisocyanate (A2) in order to improve the storage stability and the coatability of the polyisocyanate composition (X) and to improve the flexibility of a coating film when used as a two-component curable composition to be described later. Examples of the isocyanate derivative (A3) include a known aromatic diisocyanate, araliphatic diisocyanate, aliphatic diisocyanate, and alicyclic diisocyanate, a biuret, a nurate, an adduct, an allophanate, a carbodiimide-modified product, and a uretdione-modified product of these diisocyanates, and a polyurethane polyisocyanate other than (A1) and (A2). One or two or more kinds of these can be used in combination.

Examples of the aromatic diisocyanate include, but are not limited to, 2,2'-diphenylmethane diisocyanate, 2,4'-diphenylmethane diisocyanate, 4,4'-diphenylmethane diisocyanate (another name: MDI), polymethylene polyphenyl polyisocyanate (also referred to as polymeric MDI or crude MDI), 1,3-phenylene diisocyanate, 4,4'-diphenyl diisocyanate, 1,4-phenylene diisocyanate (another name: PPDI), 2,4-tolylene diisocyanate, 2,6-tolylene diisocyanate (another name: TDI), 4,4'-toluidine diisocyanate, 2,4,6-triisocyanate toluene, 1,3,5-triisocyanate benzene, tolidine diisocyanate (another name: TODI), dianisidine diisocyanate, naphthalene diisocyanate (another name: NDI), 4,4'-diphenyl ether diisocyanate, and 4,4',4"-triphenylmethane triisocyanate.

The araliphatic diisocyanate means an aliphatic isocyanate having one or more aromatic rings in the molecule, and examples thereof include, but are not limited to, m- or p-xylylene diisocyanate (another name: XDI) and α,α,α',α'-tetramethylxylylene diisocyanate (another name: TMXDI).

Examples of the aliphatic diisocyanate include, but are not limited to, trimethylene diisocyanate, tetramethylene diisocyanate, hexamethylene diisocyanate (another name: HDI), pentamethylene diisocyanate (another name: PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (another name: LDI).

Examples of the alicyclic diisocyanate include, but are not limited to, 3-isocyanatomethyl-3,5,5-trimethylcyclohexyl isocyanate, isophorone diisocyanate (another name: IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebiscyclohexyl isocyanate (another name: hydrogenated MDI or HMDI), 1,3-bis(isocyanatomethyl)cyclohexane (another name: hydrogenated XDI or HXDI), hydrogenated TMXDI, and norbornane diisocyanate (another name: NBDI).

Examples of a polyol for use in the synthesis of the polyurethane polyisocyanate other than (A1) and (A2) include: glycols such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol;
trifunctional or tetrafunctional aliphatic alcohols such as glycerin, trimethylolpropane, and pentaerythritol;
bisphenols such as bisphenol A, bisphenol F, hydrogenated bisphenol A, and hydrogenated bisphenol F;
dimer diols;
polyether polyols obtained by addition polymerization of an alkylene oxide such as ethylene oxide, propylene oxide, butylene oxide, styrene oxide, epichlorohydrin, tetrahydrofuran, and cyclohexylene in the presence of a polymerization initiator such as the above glycols or trifunctional or tetrafunctional aliphatic alcohols;
a polyester polyol (1), which is a reaction product of a polyester obtained by a ring-opening polymerization reaction of a cyclic ester compound such as propiolactone, butyrolactone, ε-caprolactone, σ-valerolactone, and β-methyl-σ-valerolactone with a polyhydric alcohol such as the above glycol, glycerin, trimethylolpropane, and pentaerythritol;
a polyester polyol (2) obtained by reacting a bifunctional polyol such as the above glycols, dimer diols, or bisphenols with a polycarboxylic acid;
a polyester polyol (3) obtained by reacting a trifunctional or tetrafunctional aliphatic alcohol with a polycarboxylic acid;
a polyester polyol (4) obtained by reacting a bifunctional polyol, the above trifunctional or tetrafunctional aliphatic alcohol, and a polycarboxylic acid;
a polyester polyol (5) which is a polymer of hydroxy acids such as dimethylolpropionic acid and castor oil fatty acid;
a polyether polyurethane polyol obtained by increasing the molecular weight of the above polyether polyols using an isocyanate compound;
a polyester polyether polyurethane polyol obtained by reacting at least one of the polyester polyols (1) to (5), a polyether polyol, and an isocyanate compound;
a polyester polyurethane polyol obtained by increasing the molecular weight of the polyester polyols (1) to (5) using an isocyanate compound;
castor oil-based polyols such as a castor oil, a dehydrated castor oil, a hydrogenated castor oil, which is a hydrogenated product of the castor oil, and an castor oil alkylene oxide 5-to-50 mole adduct; and a mixture thereof. One or two or more kinds of these can be used in combination.

Examples of the polycarboxylic acid for use in the synthesis of the polyester polyols (2) to (4) include: aromatic polybasic acids such as orthophthalic acid, terephthalic acid, isophthalic acid, phthalic acid anhydride, 1,4-naphthalenedicarboxylic acid, 2,5-naphthalenedicarboxylic acid, 2,6-naphthalenedicarboxylic acid, 2,3-naphthalenedicarboxylic acid anhydride, naphthalic acid, trimellitic acid, trimellitic acid anhydride, pyromellitic acid, pyromellitic acid anhydride, biphenyldicarboxylic acid, 1,2-bis(phenoxy)ethane-p,p'-dicarboxylic acid, benzophenonetetracarboxylic acid, benzophenonetetracarboxylic acid dianhydride, 5-sodium sulfoisophthalic acid, tetrachlorophthalic acid anhydride, and tetrabromophthalic acid anhydride;
methyl esters of the aromatic polybasic acids, such as dimethyl terephthalate and dimethyl 2,6-naphthalenedicarboxylate;
aliphatic polybasic acids such as malonic acid, succinic acid, succinic acid anhydride, glutaric acid, adipic acid, pimelic acid, suberic acid, azelaic acid, sebacic acid, fumaric acid, maleic acid, maleic acid anhydride, and itaconic acid;
alkyl esters of the aliphatic polybasic acids, such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, and diethyl maleate; and
alicyclic polybasic acids such as 1,1-cyclopentanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, tetrahydrophthalic acid anhydride, 4-methylhexahydrophthalic acid anhydride, hexahydrophthalic acid anhydride, cyclohexane-1,2,4-tricarboxylic acid-1,2-anhydride, humic acid anhydride, and het acid anhydride. One or two or more kinds of these can be used in combination.

In the case where the polyisocyanate composition (X) contains the isocyanate derivative (A3), the content of the polyurethane polyisocyanate (A1) in the total amount of the polyurethane polyisocyanate (A1) and the isocyanate derivative (A3) is preferably 40 mass% or more.

### (Phosphoric Acid Derivative (B))

Examples of the phosphoric acid derivative (B) include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphate. Preferred are phosphoric acid, pyrophosphoric acid, triphosphoric acid, and butyl acid phosphate.

The content of the phosphoric acid derivative (B) in the polyisocyanate composition (X) according to the present invention is 10 ppm or more and 5,000 ppm or less. Accordingly, the polyisocyanate composition (X) having excellent reactivity and storage stability can be obtained. The content of the phosphoric acid derivative (B) in the polyisocyanate composition (X) is more preferably 50 ppm or more and is more preferably 1,000 ppm or less.

The phosphoric acid derivative (B) is preferably added after urethanization of the polyurethane polyisocyanate (A1) is completed. In the case of production through the step of removing the unreacted isocyanate monomer, the phosphoric acid derivative (B) may be added after the urethane reaction of the polyurethane polyisocyanate (A1) is completed and before the unreacted isocyanate monomer is removed, or may be added after the isocyanate monomer is removed.

### <Two-component Curable Composition>

The polyisocyanate composition (X) according to the present invention can be used as a two-component curable composition in combination with an isocyanate reactive composition containing a compound having reactivity with an isocyanate. Examples of the compound having reactivity with an isocyanate include a polyether polyol, a polyester polyol, a polyester polyether polyol, a polyurethane polyol, a polyester polyurethane polyol, a polyether polyurethane polyol, a vegetable oil polyol, a sugar alcohol, a polycarbonate polyol, an acrylic polyol, a hydroxy group-containing olefin resin, a hydroxy group-containing fluororesin, and a (poly)alkanolamine.

Such a two-component curable composition can be used for, for example, an adhesive, a coating agent, a sealant, and an elastomer.

### <Two-component Curable Coating Agent>

A two-component curable coating agent according to the present invention contains the polyisocyanate composition (X) described above and an isocyanate reactive composition (Y). The coating agent according to the present invention can be suitably used in various applications, and because of having excellent adhesion to a metal material, can be particularly suitably used as a coating agent for a metal substrate such as an aluminum or steel sheet, for an overcoat for a coating film containing an aluminum pigment or metal particles, for coating an electrical component, or for electrical insulation.

The isocyanate reactive composition (Y) contains a compound (C) having a plurality of functional groups having reactivity with an isocyanate, such as a polyester polyol (C1), a polyether polyol (C2), a vegetable oil polyol (C3), a polyurethane polyol (C4), a sugar alcohol (C5), an acrylic polyol (C6), an amine compound (C7), and an epoxy compound (C8) (hereinafter, also referred to as an isocyanate reactive compound (C)). The isocyanate reactive compound (C) can be used alone or in combination of two or more kinds thereof.

Examples of the polyester polyol (C1) include a polyester polyol, which is a reaction product of a polyhydric alcohol and a polycarboxylic acid, and a lactone-based polyester polyol, which is obtained by a polycondensation reaction of an aliphatic polyol and various lactones such as ε-caprolactone. It is preferable to use a polyester polyol, which is a reaction product of a polyhydric alcohol and a polycarboxylic acid.

Examples of the polyhydric alcohol include: aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl-1,5-pentanediol, neopentyl glycol, 1,6-hexanediol, 1,4-bis(hydroxymethyl)cyclohexane, and 2,2,4-trimethyl-1,3-pentanediol;
trifunctional or higher functional aliphatic polyols such as trimethylolethane, trimethylolpropane, glycerin, hexanetriol, and pentaerythritol;
bisphenols such as bisphenol A and bisphenol F;
alkylene oxide adducts of bisphenols obtained by adding ethylene oxide, propylene oxide, or the like to bisphenols such as bisphenol A and bisphenol F; and
polyether polyols obtained by ring-opening polymerization of aliphatic diols or polyols and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether. One or two or more kinds of these can be used in combination.

Examples of the polycarboxylic acid include: aliphatic dicarboxylic acids such as succinic acid, adipic acid, azelaic acid, sebacic acid, dodecanedicarboxylic acid, maleic acid anhydride, fumaric acid, 1,3-cyclopentanedicarboxylic acid, and 1,4-cyclohexanedicarboxylic acid;
aromatic dicarboxylic acids such as orthophthalic acid, isophthalic acid, terephthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid;
anhydrides or ester-forming derivatives of these aliphatic or dicarboxylic acids; and
polybasic acids such as p-hydroxybenzoic acid, p-(2-hydroxyethoxy)benzoic acid, ester-forming derivatives of these dihydroxycarboxylic acids, and dimer acids. One or two or more kinds of these can be used in combination.

The molecular weight of the polyester polyol (C1) is preferably 250 g/mol or more and 20,000 g/mol or less, and more preferably 500 g/mol or more and 10,000 g/mol or less.

The hydroxyl value of the polyester polyol (C1) is preferably 5 mgKOH/g or more and 500 mgKOH/g or less.

Examples of the polyether polyol (C2) include one obtained by addition polymerization of an alkylene oxide such as ethylene oxide, propylene oxide, butylene oxide, styrene oxide, epichlorohydrin, tetrahydrofuran, and cyclohexylene in the presence of a polymerization initiator.

Examples of the polymerization initiator include: glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol;
trifunctional or tetrafunctional aliphatic alcohols such as glycerin, trimethylolpropane, pentaerythritol, and a triol of a polypropylene glycol;
primary or secondary alkylamines such as ethylamine and diethylamine; amine compounds having a plurality of amino groups such as methylenediamine and ethylenediamine; and amine compounds having an active hydrogen group such as primary or secondary alkanolamines such as monoethanolamine and diethanolamine.

The molecular weight of the polyether polyol (C2) can be appropriately adjusted, and is, for example, preferably 100 g/mol or more and 8,000 g/mol or less.

The hydroxyl value of the polyether polyol (C2) can be appropriately adjusted, and is, for example, preferably 10 mgKOH/g or more and 1,200 mgKOH/g or less.

Examples of the vegetable oil polyol (C3) include a castor oil, a dehydrated castor oil, a hydrogenated castor oil, which is a hydrogenated product of the castor oil, and an castor oil alkylene oxide 5-to-50 mole adduct.

The polyurethane polyol (C4) is a reaction product of a low or high molecular weight polyol and a polyisocyanate compound. As the low or high molecular weight polyol, those same as the polyhydric alcohols exemplified as the raw material of the polyester polyol (C1) can be used. As the polyisocyanate compound, those same as the compounds exemplified as the raw material of the isocyanate derivative (A3) can be used.

Examples of the sugar alcohol (C5) include pentaerythritol, sucrose, xylitol, sorbitol, isomalt, lactitol, maltitol, and mannitol.

The acrylic polyol (C6) is obtained by copolymerizing a (meth)acrylic acid ester having a hydroxy group as an essential component and, if necessary, a polymerizable unsaturated monomer. Note that, in the present description, (meth)acrylic acid means methacrylic acid or acrylic acid.

Examples of the (meth)acrylic acid ester having a hydroxy group include hydroxyethyl (meth)acrylate, hydroxypropyl (meth)acrylate, and hydroxybutyl (meth)acrylate, and one or two or more kinds of these can be used in combination.

Examples of the polymerizable unsaturated monomer include, but are not limited to: alkyl (meth)acrylates having an alkyl group having 1 to 22 carbon atoms, such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate, and lauryl (meth)acrylate;
aralkyl (meth)acrylates such as benzyl (meth)acrylate and 2-phenylethyl (meth)acrylate;
cycloalkyl (meth)acrylates such as cyclohexyl (meth)acrylate and isobornyl (meth)acrylate;
ω-alkoxyalkyl (meth)acrylates such as 2-methoxyethyl (meth)acrylate and 4-methoxybutyl (meth)acrylate;
polyfunctional (meth)acrylates such as ethylene glycol di(meth)acrylate, trimethylolpropane tri(meth)acrylate, and dipentaerythritol hexa(meth)acrylate;
polymerizable unsaturated monomers having an acid group, such as (meth)acrylic acid, maleic acid, itaconic acid, citraconic acid, mesaconic acid, maleic acid anhydride, 4-methylcyclohex-4-ene-1,2-dicarboxylic acid anhydride, bicyclo[2.2.2]oct-5-ene-2,3-dicarboxylic acid anhydride, 1,2,3,4,5,8,9,10-octahydronaphthalene-2,3-dicarboxylic acid anhydride, 2-octa-1,3-diketospiro[4.4]non-7-ene, bicyclo[2.2.1]hept-5-ene-2,3-dicarboxylic acid anhydride, maleopimaric acid, tetrahydrophthalic acid anhydride, methyl-bicyclo[2.2.1]hept-5-ene-2,3-dicarboxylic acid anhydride, methyl-norbornene-5-ene-2,3-dicarboxylic acid anhydride, norborn-5-ene-2,3-dicarboxylic acid anhydride, sulfonated styrene, and vinylbenzenesulfonamide;
vinyl carboxylate esters such as vinyl acetate, vinyl propionate, vinyl pivalate, and vinyl benzoate;
alkyl esters of crotonic acid such as methyl crotonate and ethyl crotonate; and
dialkyl esters of unsaturated dibasic acids such as dimethyl maleate, di-n-butyl maleate, dimethyl fumarate, and dimethyl itaconate. These may be used alone or in combination of two or more kinds thereof.

The amine compound (C7) is a compound having an amino group. Note that, in the present description, the amino group refers to an NH₂ group or an NHR group (R represents an alkyl group or an aryl group which may have a functional group).

As the amine compound (C7), known compounds can be used without particular limitation. Examples thereof include: an amine compound (C7-1) having a plurality of amino groups, such as methylenediamine, ethylenediamine, isophoronediamine, 3,9-dipropanamine-2,4,8,10-tetraoxaspirodoundecane, lysine, 2,2,4-trimethylhexamethylenediamine, hydrazine, piperazine, 2-hydroxyethylethylenediamine, di-2-hydroxyethylethylenediamine, di-2-hydroxyethylpropylenediamine, 2-hydroxypropylethylenediamine, di-2-hydroxypropylethylenediamine, poly(propylene glycol)diamine, poly(propylene glycol)triamine, poly(propylene glycol)tetraamine, 1,2-diaminopropane, 1,3-diaminopropane,
1,4-diaminobutane, 1,5-diaminopentane, 1,6-diaminohexane, 1,7-diaminoheptane, 1,8-diaminooctane, 1,9-diaminononane, 1,10-diaminodecane, diethylenetriamine, dipropylenetriamine, triethylenetetramine, tripropylenetetramine, tetraethylenepentamine, tetrapropylenepentamine, pentaethylenehexamine, nonaethylenedecamine, trimethylhexamethylenediamine, tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bishexamethylenetriamine, 1,4-cyclohexanediamine, 4,4'-methylenebiscyclohexylamine, 4,4'-isopropylidenebiscyclohexylamine, norbornadiamine,
bis(aminomethyl)cyclohexane, diaminodicyclohexylmethane, isophoronediamine, menthenediamine, bis(cyanoethyl)diethylenetriamine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, and polyurea amines, which are reaction products of the above various polyamines and the above various isocyanate components;
a primary or secondary alkanolamine (C7-2) such as monoethanolamine, monoisopropanolamine, monobutanolamine, N-methylethanolamine, N-ethylethanolamine, N-methylpropanolamine, diethanolamine, and diisopropanolamine; and
a primary or secondary amine (C7-3) such as ethylamine, octylamine, laurylamine, myristylamine, stearylamine, oleylamine, diethylamine, dibutylamine, and distearylamine.

The blending amount of the amine compound (C7) may be appropriately adjusted according to the purpose, and for example, the amine compound (C7) is blended such that the amine value of the isocyanate reactive composition (Y) is preferably 20 mgKOH/g to 70 mgKOH/g, and more preferably 25 mgKOH/g to 50 mgKOH/g.

Note that, the amine value in the present description means the number of milligrams of KOH equivalent to the amount of HCl required to neutralize 1 g of a sample and is not particularly limited. The amine value can be calculated using a known method. In the case where the chemical structure of the amine compound (E7) and, if necessary, the average molecular weight and the like thereof are known, the amine value can be calculated based on (number of amino groups per molecule/average molecular weight) × 56.1 × 1000. In the case where the chemical structure, the average molecular weight, and the like of the amine compound are unknown, the amine value can be measured according to a known amine value measurement method, for example, JISK7237-1995.

The epoxy compound (C8) is not particularly limited as long as it is a compound having an epoxy group in the molecule. Examples thereof include: polyglycidyl ether type epoxy resins of aliphatic polyols such as ethylene glycol, propylene glycol, hexanediol, neopentyl glycol, trimethylolethane, trimethylolpropane, pentaerythritol, glycerin, diglycerin, sorbitol, spiroglycol, and hydrogenated bisphenol A;
bisphenol type epoxy resins such as a bisphenol A type epoxy resin, a bisphenol F type epoxy resin, a bisphenol S type epoxy resin, and a bisphenol AD type epoxy resin;
aromatic epoxy resins such as a novolac type epoxy resin, which is a glycidyl ether of a phenol novolac resin and a cresol novolac resin;
polyglycidyl ethers of polyols, which are ethylene oxide or propylene oxide adducts of aromatic polyhydroxy compounds, such as bisphenol A, bisphenol F, bisphenol S, and bisphenol AD;
polyglycidyl ether type epoxy resins of polyether polyols such as a polyethylene glycol, a polypropylene glycol, and polytetramethylene glycol; cyclic aliphatic type polyepoxy resins such as bis(3,4-epoxycyclohexylmethyl) adipate and 3,4-epoxycyclohexylmethyl-3',4'-epoxycyclohexylcarboxylate;
polyglycidyl ester type epoxy resins of polycarboxylic acids such as propanetricarboxylic acid, butanetetracarboxylic acid, adipic acid, phthalic acid, terephthalic acid, and trimellitic acid;
bisepoxy resins of hydrocarbon-based dienes such as butadiene, hexadiene, octadiene, dodecadiene, cyclooctadiene, α-pinene, and vinylcyclohexene;
epoxy resins of diene polymers such as polybutadiene and polyisoprene;
glycidylamine type epoxy resins such as tetraglycidyl diaminodiphenylmethane, triglycidyl paraaminophenol, tetraglycidyl bisaminomethylcyclohexane, diglycidylaniline, and tetraglycidyl metaxylylenediamine; and
epoxy resins having a heterocyclic ring such as triazine and hydantoin.

These may be used alone or in combination of two or more kinds thereof.

The isocyanate reactive compound (C) preferably contains a bifunctional compound. Accordingly, the flexibility of a cured coating film can be improved, and a coating agent having more excellent adhesion to the substrate can be obtained. The content of the bifunctional compound in the isocyanate reactive compound (C) may be appropriately adjusted, and is, for example, 50 mass% or more, or 80 mass% or more. The total amount of the isocyanate reactive compound (C) may be the bifunctional compound.

The isocyanate reactive compound (C) preferably has a glass transition temperature (Tg) of 15°C or higher. Accordingly, the coating agent in which blocking is prevented can be obtained. The upper limit of the glass transition temperature of the isocyanate reactive compound (C) may be appropriately adjusted depending on the purpose, and is, for example, 80°C or lower.

The coating agent according to the present invention may contain a solvent. Examples of the solvent that can be used in the coating agent according to the present invention include: esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; dimethyl sulfoxide; and dimethyl sulfamide. One or two or more kinds of these can be used in combination.

The coating agent according to the present invention may contain additives such as a urethanization catalyst, an organic filler, an inorganic filler, an organic pigment, an inorganic pigment, an extender pigment, a viscous mineral, a wax, a surfactant, a stabilizer, a flow modifier, a leveling agent, a rheology control agent, an ultraviolet absorber, an antioxidant, and a plasticizer. As the urethanization catalyst and the pigment, those same as the compounds used in the two-component curable adhesive to be described later can be used.

The method of applying the coating agent is not particularly limited, and a known method can be used. Examples thereof include various coating methods such as spray coating, direct gravure coating, gravure kiss reverse coating, offset gravure coating, flexographic coating, offset coating, bar coating, roll kiss coating, forward rotation roll coating, reverse roll coating, slot die coating, vacuum die coating, (micro) chamber doctor coating, air doctor coating, blade coating, knife coating, spin coating, and dip coating.

The coating amount of the coating agent can be appropriately adjusted, and is, for example, 10 g/m² or more and 100 g/m² or less.

The two-component curable coating agent according to the present invention is preferably blended and used such that the ratio [NCO]/[isocyanate reactive functional group] of the number of moles of the isocyanate group contained in the polyisocyanate composition (X) [NCO] to the number of moles of the functional group having reactivity with the isocyanate contained in the isocyanate reactive composition (Y) [isocyanate reactive functional group] is 0.5 to 5.0, and more preferably 1.0 to 3.0. Accordingly, appropriate curability can be obtained without depending on the environmental humidity during coating.

### <Two-component Curable Adhesive>

A two-component curable adhesive according to the present invention contains the polyisocyanate composition (X) and the isocyanate reactive composition (Y) described above.

In the case where the adhesive according to the present invention is used as a solventless adhesive, the viscosity of the polyisocyanate composition (X) is adjusted to a range suitable for a non-solvent lamination method. For example, the viscosity at 40°C is adjusted to a range of 100 mPas to 50,000 mPas, and preferably 500 mPas to 20,000 mPas. The viscosity of the polyisocyanate composition (X) can be adjusted by, for example, the structure (polyol to be used) of the polyurethane polyisocyanate (A1). The viscosity of the polyisocyanate composition (X) can be measured, for example, using a rotary viscometer at a cone plate of 1° × 50 mm in diameter, a shear rate of 100 sec⁻¹, and 40°C ± 1°C.

In the case where the adhesive according to the present invention is used as a solvent type adhesive, the viscosity of the polyisocyanate composition (X) can be prepared by dilution using a solvent to be described later.

### (Isocyanate Reactive Composition (Y))

The isocyanate reactive composition (Y) contains the isocyanate reactive compound (C). As the isocyanate reactive compound (C), those same as the compounds used in the coating agent described above can be used alone or in combination of two or more kinds thereof.

The isocyanate reactive compound (C) preferably contains a bifunctional compound. Accordingly, the flexibility of a cured coating film of the adhesive can be improved, and an adhesive having more excellent adhesiveness or adhesion to the substrate can be obtained. The content of the bifunctional compound in the isocyanate reactive compound (C) may be appropriately adjusted, and is, for example, 50 mass% or more, or 80 mass% or more. The total amount of the isocyanate reactive compound (C) may be the bifunctional compound.

The isocyanate reactive compound (C) preferably has a glass transition temperature (Tg) of 40°C or lower. Accordingly, an adhesive having excellent adhesiveness can be obtained. The lower limit of the glass transition temperature of the isocyanate reactive compound (C) may be appropriately adjusted depending on the purpose, and is, for example, - 50°C or higher.

### (Monool Compound (D))

The isocyanate reactive composition (Y) may contain a monool compound (D) having one alcoholic hydroxy group. The main chain of the monool compound (D) is not particularly limited, and examples thereof include a vinyl resin, an acrylic resin, a polyester, an epoxy resin, and a urethane resin each having one hydroxy group. In addition, aliphatic alcohols, alkyl alkylene glycols, and the like can also be used. The main chain of the monool compound (D) may be linear or branched. The bonding position of the hydroxy group is not particularly limited, and is preferably present at a terminal of the molecular chain.

Specific examples of the monool compound (D) include: aliphatic monools such as methanol, ethanol, propanol, butanol, pentanol, hexanol, heptanol, octanol, nonanol, decanol, lauryl alcohol, myristyl alcohol, pentadecanol, cetyl alcohol, heptadecanol, stearyl alcohol, nonadecanol, other alkanols (C20 to C50), oleyl alcohol, and an isomer thereof;
alicyclic monools such as cyclohexanol, methylcyclohexanol, 4-butylcyclohexanol, 4-pentylcyclohexanol, 4-hexylcyclohexanol, cyclodecanol, cyclododecanol, cyclopentadecanol, 4-isopropylcyclohexanol, 3,5,5-trimethylcyclohexanol, menthol, 2-norbornanol, borneol, 2-adamantanol, dicyclohexylmethanol, decatol, 2-cyclohexylcyclohexanol, 4-cyclohexylcyclohexanol, 4-(4-propylcyclohexyl)cyclohexanol, 4-(4-pentylcyclohexyl)cyclohexanol, α-ambrinol, desoxycorticosterone, 11-dehydrocorticosterone, cholesterol, β-sitosterol, campesterol, stigmasterol, brassicasterol, lanosterol, ergosterol, β-cholestanol, testosterone, estrone, digitoxigenin, dehydroepiandrosterone, coprostanol, pregnenolone, epicholestanol, 7-dehydrocholesterol, estradiol benzoate, tigogenin, hecogenin, methandienone, cortisone acetate, stenolone, and an isomer thereof;
araliphatic monools such as benzyl alcohol; and
polyoxyalkylene monools obtained by ring-opening addition polymerization of an alkylene oxide such as ethylene oxide, propylene oxide, butylene oxide, and tetrahydrofuran using an alkyl compound containing one active hydrogen as an initiator.

In the case where the adhesive according to the present invention is supplied in the form of a solventless adhesive, the viscosity of the isocyanate reactive composition (Y) is adjusted to a range suitable for a non-solvent lamination method. For example, the viscosity at 40°C is adjusted to a range of 100 mPas to 50,000 mPas, and preferably 100 mPas to 20,000 mPas. The viscosity of the isocyanate reactive composition (Y) can be adjusted by the skeleton of the isocyanate reactive compound (C), a plasticizer to be described later, and the like.

### (Other Components in Adhesive)

The two-component curable adhesive according to the present invention may contain components other than the above components. The other components may be contained in either or both of the polyisocyanate composition (X) and the isocyanate reactive composition (Y), or may be prepared separately and mixed with the polyisocyanate composition (X) and the isocyanate reactive composition (Y) immediately before the coating of the adhesive. Hereinafter, each component will be described.

### (Catalyst)

Examples of a catalyst include a metal-based catalyst, an amine-based catalyst, an aliphatic cyclic amide compound, and a quaternary ammonium salt.

Examples of the metal-based catalyst include a metal complex-based catalyst, an inorganic metal-based catalyst, and an organic metal-based catalyst. Examples of the metal complex-based catalyst include acetylacetonate salts of a metal selected from the group consisting of Fe (iron), Mn (manganese), Cu (copper), Zr (zirconium), Th (thorium), Ti (titanium), Al (aluminum), and Co (cobalt), such as iron acetylacetonate, manganese acetylacetonate, copper acetylacetonate, and zirconia acetylacetonate.

Examples of the inorganic metal-based catalyst include those selected from Sn, Fe, Mn, Cu, Zr, Th, Ti, Al, and Co.

Examples of the organic metal-based catalyst include: organic zinc compounds such as zinc octylate, zinc neodecanoate, and zinc naphthenate; organic tin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organic nickel compounds such as nickel octylate and nickel naphthenate; organic cobalt compounds such as cobalt octylate and cobalt naphthenate; organic bismuth compounds such as bismuth octoate, bismuth neodecanoate, and bismuth naphthenate; and titanium-based compounds such as a titanium chelate complex having, as a ligand, at least one of tetraisopropyloxytitanate, dibutyltitanium dichloride, tetrabutyl titanate, butoxytitanium trichloride, an aliphatic diketone, an aromatic diketone, and an alcohol having 2 to 10 carbon atoms.

Examples of the amine-based catalyst include triethylenediamine, 2-methyltriethylenediamine, quinuclidine, 2-methylquinuclidine, N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl)ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compound include δ-valerolactam, ε-caprolactam, ω-enantholactam, η-capryllactam, and β-propiolactam. Among them, ε-caprolactam is more effective for accelerating curing.

Examples of the quaternary ammonium salt include a hydroxy salt, an alkyl acid salt, and a halide salt of alkyl ammonium and aromatic ammonium. Examples thereof include, but are not limited to, tetramethylammonium hydroxide, tetraethylammonium hydroxide, tetrapropylammonium hydroxide, tetrabutylammonium hydroxide, benzyltrimethylammonium hydroxide, tetrabutylammonium fluoride, tetrabutylammonium chloride, tetrabutylammonium bromide, tetrabutylammonium iodide, benzyltriethylammonium chloride, and hexadecyltrimethylammonium bromide.

### (Coupling Agent)

Examples of a coupling agent include a silane coupling agent, a titanate-based coupling agent, and an aluminum-based coupling agent.

Examples of the silane coupling agent include: aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, N-phenyl-γ-aminopropyltrimethoxysilane, bis[3-(trimethoxysilyl)propyl]amine, and bis[3-(triethoxysilyl)propyl]amine; epoxysilanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

Examples of the titanate-based coupling agent include tetraisopropoxy titanium, tetra-n-butoxy titanium, a butyl titanate dimer, tetrastearyl titanate, titanium acetylacetonate, titanium lactate, tetraoctylene glycol titanate, titanium lactate, and tetrastearoxy titanium.

Examples of the aluminum-based coupling agent include acetoalkoxyaluminum diisopropylate.

### (Pigment)

A pigment is not particularly limited, and examples thereof include organic pigments and inorganic pigments such as an extender pigment, a white pigment, a black pigment, a gray pigment, a red pigment, a brown pigment, a green pigment, a blue pigment, a metal powder pigment, a luminescent pigment, and a pearlescent pigment, which are described in Handbook of Paint and Coating Raw Materials 1970 (edited by Japan Paint Manufacturers Association), and plastic pigments.

Examples of the extender pigment include precipitated barium sulfate, gohun, precipitated calcium carbonate, calcium bicarbonate, white marble, white alumina, silica, hydrous fine powder silica (white carbon), ultrafine anhydrous silica (Aerosil), silica sand, talc, precipitated magnesium carbonate, bentonite, clay, kaolin, and ocher.

Specific examples of the organic pigments include: various insoluble azo pigments such as Benzidine Yellow, Hansa Yellow, and Lake Red 4R; soluble azo pigments such as Lake Red C, Carmine 6B, and Bordeaux 10; various (copper) phthalocyanine-based pigments such as phthalocyanine blue and phthalocyanine green; various chlorine dyeing lakes such as Rhodamine Lake and Methyl Violet Lake; various mordant dye-based pigments such as Quinoline Lake and Fast Sky Blue; various vat dye-based pigments such as an anthraquinone-based pigment, a thioindigo-based pigment, and a perinone-based pigment; various quinacridone-based pigments such as Cinquasia Red B; various dioxazine-based pigments such as Dioxazine Violet; various condensed azo pigments such as Cromophtal; and aniline black.

Examples of the inorganic pigments include: various chromates such as chrome yellow, zinc chromate, and molybdate orange; various ferrocyanide compounds such as Prussian blue; various metal oxides such as titanium oxide, zinc white, mapico yellow, iron oxide, red iron oxide, chromium oxide green, and zirconium oxide; various sulfides or selenides such as cadmium yellow, cadmium red, and mercury sulfide; various sulfates such as barium sulfate and lead sulfate; various silicates such as calcium silicate and ultramarine blue; various carbonates such as calcium carbonate and magnesium carbonate; various phosphates such as cobalt violet and manganese violet; various metal powder pigments such as an aluminum powder, a gold powder, a silver powder, a copper powder, a bronze powder, and a brass powder; flake pigments and mica flake pigments of these metals; metallic pigments and pearl pigments such as a mica flake pigment in the form of being coated with a metal oxide and a mica-like iron oxide pigment; graphite; and carbon black.

Examples of the plastic pigments include "GRANDOLL PP-1000" and "PP-2000S" manufactured by DIC Corporation.

The pigment to be used may be appropriately selected according to the purpose, and for example, an inorganic oxide such as titanium oxide or zinc white is preferably used as the white pigment, and carbon black is preferably used as the black pigment in terms of excellent durability, weather resistance, and design properties.

The blending amount of the pigment with respect to 100 parts by mass of the total nonvolatile content of the polyol composition (X) and the polyisocyanate composition (Y) is, for example, 1 part by mass to 400 parts by mass, and is more preferably 10 parts by mass to 300 parts by mass in order to further improve the adhesiveness and the blocking resistance.

### (Plasticizer)

Examples of the plasticizer include a phthalic acid-based plasticizer, a fatty acid-based plasticizer, an aromatic polycarboxylic acid-based plasticizer, a phosphoric acid-based plasticizer, a polyol-based plasticizer, an epoxy-based plasticizer, a polyester-based plasticizer, and a carbonate-based plasticizer.

Examples of the phthalic acid-based plasticizer include: phthalic acid ester-based plasticizers such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyldecyl phthalate, dimethyl isophthalate, di-(2-ethylhexyl) isophthalate, and diisooctyl isophthalate; and tetrahydrophthalic acid ester-based plasticizers such as di-(2-ethylhexyl) tetrahydrophthalate, di-n-octyl tetrahydrophthalate, and diisodecyl tetrahydrophthalate.

Examples of the fatty acid-based plasticizer include: adipic acid-based plasticizers such as di-n-butyl adipate, di-(2-ethylhexyl) adipate, diisodecyl adipate, diisononyl adipate, di(C6-C10 alkyl) adipate, and dibutyl diglycol adipate; azelaic acid-based plasticizers such as di-n-hexyl azelate, di-(2-ethylhexyl) azelate, and diisooctyl azelate; sebacic acid-based plasticizers such as di-n-butyl sebacate, di-(2-ethylhexyl) sebacate, and diisononyl sebacate; maleic acid-based plasticizers such as dimethyl maleate, diethyl maleate, di-n-butyl maleate, and di-(2-ethylhexyl) maleate; fumaric acid-based plasticizers such as di-n-butyl fumarate and di-(2-ethylhexyl) fumarate; itaconic acid-based plasticizers such as monomethyl itaconate, monobutyl itaconate, dimethyl itaconate, diethyl itaconate, dibutyl itaconate, and di-(2-ethylhexyl) itaconate; stearic acid-based plasticizers such as n-butyl stearate, glycerin monostearate, and diethylene glycol distearate; oleic acid-based plasticizers such as butyl oleate, glyceryl monooleate, and diethylene glycol monooleate; citric acid-based plasticizers such as triethyl citrate, tri-n-butyl citrate, acetyl triethyl citrate, acetyl tributyl citrate, and acetyl tri-(2-ethylhexyl) citrate; ricinoleic acid-based plasticizers such as methyl acetyl ricinoleate, butyl acetyl ricinoleate, glyceryl monoricinoleate, and diethylene glycol monoricinoleate; and other fatty acid-based plasticizers such as diethylene glycol monolaurate, diethylene glycol dipelargonate, and pentaerythritol fatty acid esters.

Examples of the aromatic polycarboxylic acid-based plasticizer include: trimellitic acid-based plasticizers such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate; and pyromellitic acid-based plasticizers such as tetra-(2-ethylhexyl) pyromellitate and tetra-n-octyl pyromellitate.

Examples of the phosphoric acid-based plasticizer include triethyl phosphate, tributyl phosphate, tri-(2-ethylhexyl) phosphate, tributoxyethyl phosphate, triphenyl phosphate, octyl diphenyl phosphate, cresyl diphenyl phosphate, cresyl phenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol-based plasticizer include: glycol-based plasticizers such as diethylene glycol dibenzoate, dipropylene glycol dibenzoate, triethylene glycol dibenzoate, triethylene glycol di-(2-ethylbutyrate), triethylene glycol di-(2-ethylhexoate), and dibutylmethylene bisthioglycolate; and glycerin-based plasticizers such as glycerol monoacetate, glycerol triacetate, and glycerol tributyrate.

Examples of the epoxy-based plasticizer include an epoxidized soybean oil, epoxy butyl stearate, epoxy di-2-ethylhexyl hexahydrophthalate, epoxy diisodecyl hexahydrophthalate, epoxy triglyceride, epoxidized octyl oleate, and epoxidized decyl oleate.

Examples of the polyester-based plasticizer include an adipic acid-based polyester, a sebacic acid-based polyester, and a phthalic acid-based polyester.

Examples of the carbonate-based plasticizer include propylene carbonate and ethylene carbonate.

In addition, other examples of the plasticizer include a partially hydrogenated terphenyl, an adhesive plasticizer, and a polymerizable plasticizer such as diallyl phthalate and an acrylic monomer or oligomer. These plasticizers can be used alone or in combination of two or more kinds thereof.

### (Acid Anhydride)

Examples of an acid anhydride include a cyclic aliphatic acid anhydride, an aromatic acid anhydride, and an unsaturated carboxylic acid anhydride, and these can be used alone or in combination of two or more kinds thereof. More specific examples include maleic acid anhydride, phthalic acid anhydride, trimellitic acid anhydride, pyromellitic acid anhydride, benzophenonetetracarboxylic acid anhydride, dodecenylsuccinic acid anhydride, polyadipic acid anhydride, polyazelaic acid anhydride, polysebacic acid anhydride, poly(ethyloctadecanedioic acid) anhydride, poly(phenylhexadecanedioic acid) anhydride, tetrahydrophthalic acid anhydride, methyltetrahydrophthalic acid anhydride, methylhexahydrophthalic acid anhydride, hexahydrophthalic acid anhydride, methylhimic acid anhydride, trialkyltetrahydrophthalic acid anhydride, methylcyclohexene dicarboxylic acid anhydride, methylcyclohexene tetracarboxylic acid anhydride, ethylene glycol bistrimellitate dianhydride, het acid anhydride, nadic acid anhydride, methylnadic acid anhydride, 5-(2,5-dioxotetrahydro-3-furanyl)-3-methyl-3-cyclohexane-1,2-dicarboxylic acid anhydride, 3,4-dicarboxy-1,2,3,4-tetrahydro-1-naphthalenesuccinic acid dianhydride, and 1-methyl-dicarboxy-1,2,3,4-tetrahydro-1-naphthalenesuccinic acid dianhydride.

As the acid anhydride, those obtained by modifying the above compound using a glycol may be used. Examples of the glycol that can be used for modification include: alkylene glycols such as ethylene glycol, propylene glycol, and neopentyl glycol; and polyether glycols such as a polyethylene glycol, a polypropylene glycol, and polytetramethylene ether glycol. Further, a copolymerized polyether glycol of two or more of these glycols and/or polyether glycols can also be used.

Alternatively, as the acid anhydride, a homopolymer or a copolymer of a compound having a polymerizable unsaturated group, such as maleic acid anhydride among the compounds described above, may be used. Examples of a compound copolymerizable with the compound having an acid anhydride group and a polymerizable unsaturated group include: α-olefins such as ethylene, propylene, 1,3-butadiene, and cyclopentylethylene; vinyl compounds having an aromatic ring such as styrene, 1-ethynyl-4-methylbenzene, divinylbenzene, 1-ethynyl-4-methylethylbenzene, benzonitrile, acrylonitrile, ptert-butylstyrene, 4-vinylbiphenyl, 4-ethynylbenzyl alcohol, 2-ethynylnaphthalene, and phenanthrene-9-ethynyl; and fluoroolefins such as vinylidene fluoride, tetrafluoroethylene, hexafluoropropylene, and chlorotrifluoroethylene, which may be used alone or in combination of two or more kinds thereof. It is preferable to use styrene and p-tert-butylstyrene, which are vinyl compounds having an aromatic ring.

### (Phosphoric Acid Compound)

Examples of the phosphoric acid compound include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphate. In the adhesive according to the present invention, since the polyisocyanate composition (X) contains a phosphoric acid compound, the phosphoric acid compound may not be added when forming the adhesive.

### (Form of Adhesive)

The two-component curable adhesive according to the present invention may be either a solvent type adhesive or a solventless adhesive. Note that, in the present description, the "solvent type" adhesive refers to a form for use in a so-called dry lamination method, that is, a method of coating a substrate with an adhesive, then heating the adhesive in an oven or the like to volatilize an organic solvent in a coating film, and then bonding the substrate to another substrate. One or both of the polyisocyanate composition (X) and the isocyanate reactive composition (Y) contain an organic solvent capable of dissolving (diluting) constituent components of the polyisocyanate composition (X) and the isocyanate reactive composition (Y) used in the present invention.

Examples of the organic solvent include: esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; dimethyl sulfoxide; and dimethyl sulfamide. The organic solvent used as a reaction medium during the production of the constituent components of the polyisocyanate composition (X) and the isocyanate reactive composition (Y) may be further used as a diluent during coating.

In the present description, the "solventless" adhesive refers to a form of an adhesive for use in a so-called non-solvent lamination method, that is, a method of substantially not incorporating, into the polyisocyanate composition (X) and the isocyanate reactive composition (Y), a highly soluble organic solvent such as esters such as ethyl acetate, butyl acetate, and cellosolve acetate, ketones such as acetone, methyl ethyl ketone, isobutyl ketone, and cyclohexanone, ethers such as tetrahydrofuran and dioxane, aromatic hydrocarbons such as toluene and xylene, halogenated hydrocarbons such as methylene chloride and ethylene chloride, dimethyl sulfoxide, and dimethyl sulfamide, particularly ethyl acetate or methyl ethyl ketone, coating a substrate with the adhesive, and then bonding the substrate to another substrate without a step of volatilizing the solvent by heating in an oven or the like. In the case where the organic solvent used as the reaction medium is not completely removed during the production of the constituent components of the polyisocyanate composition (X) or the isocyanate reactive composition (Y) and the raw materials thereof, and a small amount of the organic solvent remains in the polyisocyanate composition (X) or the isocyanate reactive composition (Y), it is understood that the organic solvent is not substantially contained. In addition, in the case where the isocyanate reactive composition (Y) contains a low molecular weight alcohol, the low molecular weight alcohol reacts with the polyisocyanate composition (X) to form a part of the coating film. Therefore, it is not necessary to volatilize the low molecular weight alcohol after coating. Therefore, such a form is also treated as a solventless adhesive, and a low molecular weight alcohol is not regarded as an organic solvent.

The two-component curable adhesive according to the present invention is preferably blended and used such that the ratio [NCO]/[isocyanate reactive functional group] of the number of moles of the isocyanate group contained in the polyisocyanate composition (X) [NCO] to the number of moles of the functional group having reactivity with the isocyanate contained in the isocyanate reactive composition (Y) [isocyanate reactive functional group] is 0.5 to 5.0, and more preferably 1.0 to 3.0. Accordingly, appropriate curability can be obtained without depending on the environmental humidity during coating.

### <Laminate>

A laminate according to the present invention is obtained by, for example, a method including a two-component mixing step of mixing the polyisocyanate composition (X) and the isocyanate reactive composition (Y) in advance, then coating a first substrate with the mixture, then laminating a second substrate on the coating surface, and curing an adhesive layer, or a method including a two-component separate coating step of respectively coating a first substrate and a second substrate with the polyisocyanate composition (X) and the isocyanate reactive composition (Y), then bringing the coating surfaces into contact with each other, performing pressure bonding to laminate the first substrate and the second substrate, and curing an adhesive layer. The film to be used is not particularly limited, and a film can be appropriately selected according to the application.

Examples of a food packaging material include a polyethylene terephthalate (PET) film, a polystyrene film, a polyamide film, a polyacrylonitrile film, a polyethylene film (LLDPE: low density polyethylene film, HDPE: high density polyethylene film, MDOPE: uniaxially oriented polyethylene film, OPE: biaxially oriented polyethylene film), a polypropylene film (CPP: non-oriented polypropylene film, OPP: biaxially oriented polypropylene film), a polyolefin film such as a heat sealable film having a gas barrier property in which an olefin-based heat sealable resin layer is provided on one surface or both surfaces of a resin having a gas barrier property such as an ethylene vinyl alcohol copolymer and polyvinyl alcohol, a polyvinyl alcohol film, and an ethylene-vinyl alcohol copolymer film.

In addition, it is preferable to use a biomass film, a biodegradable film, or a recycled plastic film formed of a material containing a biomass-derived component, a biodegradable component, or a recycled component.

The biomass film, the biodegradable film, and the recycled plastic film are commercially available from various companies, and for example, films certified in each country, such as a film sheet listed in a list of certified biomass products described in Japan Organics Recycling Association, a film listed in a list of ECO Mark-certified products described in Japan Environment Association, and a film having a symbol mark defined by Japan Bioplastic Association, can be used.

### (Biomass Film)

Specific examples of the well-known biomass film include those using a biomass-derived ethylene glycol as a raw material. The biomass-derived ethylene glycol is obtained by using, as a raw material, ethanol (biomass ethanol) produced using a biomass as a raw material. For example, biomass-derived ethylene glycol can be obtained according to a method of producing ethylene glycol from biomass ethanol via ethylene oxide according to a known method. In addition, commercially available biomass ethylene glycol may be used, and for example, a biomass ethylene glycol commercially available from India Glycols Limited can be suitably used.

For example, a film containing a biomass polyethylene terephthalate, a biomass polyester containing biomass-derived ethylene glycol as a diol unit and a fossil fuel-derived dicarboxylic acid as a dicarboxylic acid unit, or the like is known as an alternative to a polyethylene terephthalate film containing a petroleum-based raw material in the related art.

As the dicarboxylic acid unit in the biomass polyester, a dicarboxylic acid derived from fossil fuel is used. As the dicarboxylic acid, an aromatic dicarboxylic acid, an aliphatic dicarboxylic acid, and derivatives thereof can be used without limitation.

In addition, a copolymerized polyester may be also used, which is obtained by adding, in addition to the diol component and the dicarboxylic acid component described above, a copolymerization component as a third component, such as at least one polyfunctional compound selected from the group consisting of a bifunctional oxycarboxylic acid, a trifunctional or higher functional polyhydric alcohol for forming a crosslinked structure, a trifunctional or higher functional polycarboxylic acid and/or an anhydride thereof, and a trifunctional or higher functional oxycarboxylic acid.

In addition, for example, a biomass polyolefin-based film such as a biomass polyethylene-based film containing a polyethylene-based resin containing biomass-derived ethylene glycol as a raw material, a biomass polyethylene-polypropylene-based film, or the like is also known as an alternative to a polyolefin-based film containing a petroleum-based raw material in the related art.

The polyethylene-based resin is not particularly limited except that the biomass-derived ethylene glycol is used as a part of the raw material, and examples thereof include a homopolymer of ethylene and a copolymer of ethylene and an α-olefin which contains ethylene as a main component (an ethylene-α-olefin copolymer containing 90 mass% or more of an ethylene unit), and these can be used alone or in combination of two or more kinds thereof.

Note that, the α-olefin constituting the copolymer of ethylene and an α-olefin is not particularly limited, and examples thereof include α-olefins having 4 to 8 carbon atoms such as 1-butene, 4-methyl-1-pentene, 1-hexene, and 1-octene. Known polyethylene resins such as a low density polyethylene resin, a medium density polyethylene resin, and a linear low density polyethylene resin can be used. Among them, a linear low density polyethylene resin (LLDPE) (a copolymer of ethylene and 1-hexene or a copolymer of ethylene and 1-octene) is preferred, and a linear low density polyethylene resin having a density of 0.910 g/cm³ to 0.925 g/cm³ is more preferred, from the viewpoint of further preventing damage such as holes or fracture even when films rub against each other.

As the biomass film, one containing a biomass raw material distinguished by a biomass plastic degree defined in ISO16620 or ASTMD6866 is also distributed. Radioactive carbon 14C is present in the atmosphere at a proportion of 1 in 1012 atoms, and this proportion does not change even with carbon dioxide in the atmosphere. Therefore, this proportion does not change among plants in which carbon dioxide is immobilized by photosynthesis. Therefore, carbon in a plant-derived resin contains radioactive carbon 14C. In contrast, carbon in a fossil fuel-derived resin contains almost no radioactive carbon 14C. Therefore, the content proportion of the plant-derived resin in the resin, that is, the biomass plastic degree, can be determined by measuring the concentration of the radioactive carbon 14C in the resin using an accelerator mass spectrometer.

Examples of a plant-derived low density polyethylene, which is a biomass plastic having a biomass plastic degree, as defined in ISO16620 or ASTM D6866, of 80% or more, preferably 90% or more, include trade names "SBC818", "SPB608", "SBF0323HC", "STN7006", "SEB853", and "SPB681" manufactured by Braskem, and films containing these as raw materials can be suitably used.

In addition, films and sheets containing starch or polylactic acid as a biomass raw material are also known. These can be appropriately selected and used according to the application.

The biomass film may be a laminate of a plurality of biomass films or a laminate of a petroleum-based film in the related art and a biomass film. In addition, the biomass film may be a non-oriented film or an oriented film, and the production method thereof is not limited.

### (Biodegradable Film)

Specific examples of the well-known biodegradable film include those containing a generally available biodegradable resin as a raw material. Examples thereof include a polycaprolactone, a polyvinyl alcohol, a polyamide, a cellulose ester, a lactic acid-based polyester-based resin, an aliphatic polyester-based resin, and an aliphatic aromatic polyester-based resin. These biodegradable resins may be used alone or in combination of two or more kinds thereof. Among them, an aliphatic polyester-based resin or an aliphatic aromatic polyester-based resin is preferably used.

Examples of the aliphatic polyester-based resin include an aliphatic polyester obtained by a polycondensation reaction between an aliphatic diol and an aliphatic dicarboxylic acid. Examples of the aliphatic diol include ethylene glycol, 1,3-propanediol, 1,4-butanediol, 1,5-pentanediol, 1,6-hexanediol, 1,4-cyclohexanediol, and 1,4-cyclohexanedimethanol. These may be used alone, or a mixture thereof may be used. Among them, 1,4-butanediol is preferably used. Examples of the aliphatic dicarboxylic acid include oxalic acid, succinic acid, glutaric acid, adipic acid, sebacic acid, suberic acid, and dodecanedioic acid, and an acid anhydride as a derivative thereof may be used. Among them, succinic acid, succinic acid anhydride, or a mixture thereof with adipic acid is preferred.

Specific examples thereof include polybutylene succinate (PBS) obtained from 1,4-butanediol and succinic acid (for example, BioPBS manufactured by PPT MCC BIOCHEM CO., LTD.) and polybutylene succinate adipate (PBSA) obtained by copolymerizing adipic acid with PBS.

Examples of the aliphatic aromatic polyester-based resin include a copolymer containing an aliphatic dicarboxylic acid unit, an aromatic dicarboxylic acid unit, and a chain aliphatic and/or alicyclic diol unit. The diol component that provides the diol unit generally has 2 to 10 carbon atoms, and examples thereof include ethylene glycol, 1,3-propanediol, 1,4-butanediol, and 1,4-cyclohexanedimethanol. Among them, a diol having 2 to 4 carbon atoms is preferred, ethylene glycol and 1,4-butanediol are preferred, and 1,4-butanediol is more preferred. The dicarboxylic acid component that provides the dicarboxylic acid unit generally has 2 to 10 carbon atoms, and examples thereof include succinic acid, adipic acid, suberic acid, sebacic acid, and dodecanedioic acid. Among them, succinic acid or adipic acid is preferred. Examples of an aromatic dicarboxylic acid component that provides the aromatic dicarboxylic acid unit include terephthalic acid, isophthalic acid, and naphthalenedicarboxylic acid. Among them, terephthalic acid and isophthalic acid are preferred, and terephthalic acid is more preferred.

Specific examples thereof include PBAT which is a copolymer of 1,4-butanediol, adipic acid, and terephthalic acid (for example, Ecoflex manufactured by BASF Corporation).

Other examples include a poly(3-hydroxyalkanoate), which is an aliphatic polyester copolymer obtained from a hydroxyalkanoic acid and a polycarboxylic acid (among them, poly(3-hydroxybutyrate-co-3-hydroxyhexanoate) (PHBH) (for example, AONILEX manufactured by Kaneka Corporation), and polylactic acid (PLA) (for example, REVODE manufactured by Zhejiang HISUN Biomaterials Co., Ltd., and Ingeo manufactured by Nature Works Co., Ltd.).

The biodegradable film may be a laminate obtained by laminating a plurality of biodegradable films, or may be a laminate of a petroleum-based film in the related art and a biodegradable film. In addition, the biodegradable film may be a non-oriented film or an oriented film, and the production method thereof is not limited.

The film may be subjected to an orientation treatment. As the orientation treatment method, in general, the resin is melt-extruded into a sheet shape according to an extrusion film forming method or the like, and is then subjected to simultaneous biaxial orientation or sequential biaxial orientation. In addition, in the case of the sequential biaxial orientation, generally, it is common to first perform a longitudinal orientation treatment and then transverse orientation. Specifically, a method of combining longitudinal orientation utilizing a difference in speed between rolls and transverse orientation using a tenter is often used.

A film surface may be subjected to various surface treatments such as a flame treatment and a corona discharge treatment as necessary, so as to form an adhesive layer without defects such as film breakage and repelling.

Alternatively, a film obtained by laminating a vapor deposition layer of a metal such as aluminum, silica, or a metal oxide such as alumina, or a barrier film having a gas barrier layer containing polyvinyl alcohol, an ethylene-vinyl alcohol copolymer, vinylidene chloride, or the like may be used in combination. When such a film is used, a laminate having a barrier property against a water vapor, oxygen, an alcohol, an inert gas, a volatile organic substance (scent), or the like can be obtained.

Paper is not particularly limited, and a known paper substrate can be used. Specifically, the paper is produced using a natural fiber for papermaking such as a wood pulp using a known papermaking machine, and the papermaking conditions are not particularly specified. Examples of the natural fiber for papermaking include wood pulps such as a softwood pulp and a hardwood pulp, non-wood pulps such as a Manila hemp pulp, a sisal hemp pulp, and a flax pulp, and pulps obtained by chemically modifying these pulps. As the kind of the pulp, chemical pulps produced by using a sulfate cooking method, an acidic/neutral/alkaline sulfite cooking method, a soda cooking method, or the like, a ground pulp, a chemi-ground pulp, a thermomechanical pulp, or the like can be used. In addition, commercially available high quality paper, coated paper, backing paper, impregnated paper, cardboard, paperboard, or the like can also be used.

Examples of a more specific configuration of the laminate include, but are not limited to,
(1) substrate 1/adhesive layer 1/sealant film,
(2) substrate 1/adhesive layer 1/metal vapor deposition non-oriented film,
(3) substrate 1/adhesive layer 1/metal vapor deposition oriented film,
(4) transparent vapor deposition oriented film/adhesive layer 1/sealant film,
(5) substrate 1/adhesive layer 1/substrate 2/adhesive layer 2/sealant film,
(6) substrate 1/adhesive layer 1/metal vapor deposition oriented film/adhesive layer 2/sealant film,
(7) substrate 1/adhesive layer 1/transparent vapor deposition oriented film/adhesive layer 2/sealant film,
(8) substrate 1/adhesive layer 1/metal layer/adhesive layer 2/sealant film,
(9) substrate 1/adhesive layer 1/substrate 2/adhesive layer 2/metal layer/adhesive layer 3/sealant film, and
(10) substrate 1/adhesive layer 1/metal layer/adhesive layer 2/substrate 2/adhesive layer 3/sealant film.

Examples of the substrate 1 for use in the configuration (1) include an MDOPE film, an OPE film, an OPP film, a PET film, a nylon film, and paper. In addition, as the substrate 1, a substrate on which a coating is applied for the purpose of improving the gas barrier property and the ink receptivity when providing a printing layer to be described later may be used. Examples of a commercially available product of the substrate film 1 subjected to coating include a K-OPP film, a K-PET film, and a K-nylon film. The adhesive layer 1 is a cured coating film of the adhesive according to the present invention. Examples of the sealant film include a CPP film, an LLDPE film, an easily openable heat sealable film, and a heat sealable film having a gas barrier property. A printing layer may be provided on a surface of the substrate 1 on the adhesive layer 1 side (a surface of the coating layer on the adhesive layer 1 side in the case where the substrate film 1 subjected to coating is used) or the surface opposite to the adhesive layer 1. The printing layer is formed of various printing inks such as a gravure ink, a flexographic ink, an offset ink, a stencil ink, and an inkjet ink by using a general printing method commonly used for printing on a polymer film or paper in the related art.

Examples of the substrate 1 for use in the configurations (2) and (3) include an MDOPE film, an OPE film, an OPP film, a PET film, and paper. The adhesive layer 1 is a cured coating film of the adhesive according to the present invention. Examples of the metal vapor deposition non-oriented film include a VM-CPP film and a VM-LLDPE film obtained by depositing a metal such as aluminum on a CPP film, an LLDPE film, or a heat sealable film having a gas barrier property. Examples of the metal vapor deposition oriented film include a VM-MDOPE film, a VM-OPE film, and a VM-OPP film obtained by depositing a metal such as aluminum on an MDOPE film, an OPE film, and an OPP film. Similar to the configuration (1), the printing layer may be provided on either surface of the substrate 1.

Examples of the transparent vapor deposition oriented film for use in the configuration (4) include a film obtained by vapor depositing silica or alumina on an MDOPE film, an OPE film, an OPP film, a PET film, a nylon film, or the like. For the purpose of protecting the inorganic vapor deposition layer of silica or alumina, a film subjected to coating on the vapor deposition layer may be used. The adhesive layer 1 is a cured coating film of the adhesive according to the present invention. Examples of the sealant film are the same as those in the configuration (1). A printing layer may be provided on a surface of the transparent vapor deposition oriented film on the adhesive layer 1 side (a surface of the coating layer on the adhesive layer 1 side in the case where a film subjected to coating on the inorganic vapor deposition layer is used). A method of forming the printing layer is the same as that in the configuration (1).

Examples of the substrate 1 for use in the configuration (5) include a PET film and paper. Examples of the substrate 2 include a nylon film. At least one of the adhesive layer 1 and the adhesive layer 2 is a cured coating film of the adhesive according to the present invention. Examples of the sealant film are the same as those in the configuration (1). Similar to the configuration (1), the printing layer may be provided on either surface of the substrate 1.

Examples of the substrate 1 in the configuration (6) are the same as those in the configurations (2) and (3). Examples of the metal vapor deposition oriented film include a VM-MDOPE film, a VM-OPE film, a VM-OPP film, and a VM-PET film obtained by respectively depositing a metal such as aluminum on an MDOPE film, an OPE film, an OPP film, and a PET film. At least one of the adhesive layer 1 and the adhesive layer 2 is a cured coating film of the adhesive according to the present invention. Examples of the sealant film are the same as those in the configuration (1). Similar to the configuration (1), the printing layer may be provided on either surface of the substrate 1.

Examples of the substrate 1 in the configuration (7) include a PET film and paper. Examples of the transparent vapor deposition oriented film are the same as those in the configuration (4). At least one of the adhesive layers 1 and 2 is a cured coating film of the adhesive according to the present invention. Examples of the sealant film are the same as those in the configuration (1). Similar to the configuration (1), the printing layer may be provided on either surface of the substrate 1.

Examples of the substrate 1 in the configuration (8) include a PET film and paper. Examples of the metal layer include an aluminum foil. At least one of the adhesive layers 1 and 2 is a cured coating film of the adhesive according to the present invention. Examples of the sealant film are the same as those in the configuration (1). Similar to the configuration (1), the printing layer may be provided on either surface of the substrate 1.

Examples of the substrate 1 in the configurations (9) and (10) include a PET film and paper. Examples of the substrate 2 include a nylon film. Examples of the metal layer include an aluminum foil. At least one of the adhesive layers 1, 2, and 3 is a cured coating film of the adhesive according to the present invention. Examples of the sealant film are the same as those in the configuration (1). Similar to the configuration (1), the printing layer may be provided on either surface of the substrate 1.

The laminate according to the present invention may further include other films and substrates in addition to the configurations (1) to (10) described above. As other substrates, in addition to the oriented film, the non-oriented film, and the transparent vapor deposition film described above, a porous substrate such as paper to be described later, wood, and leather can also be used. The adhesive used for bonding other substrates may or may not be the adhesive according to the present invention.

The "other layers" may contain a known additive or stabilizer, for example, an antistatic agent, an easy-adhesion coating agent, a plasticizer, a lubricant, or an antioxidant. In addition, the "other layers" may be one obtained by subjecting the surface of the film to a corona treatment, a plasma treatment, an ozone treatment, a chemical treatment, a solvent treatment, or the like as a pretreatment in order to improve the adhesion in the case of being laminated with other materials.

The laminate according to the present invention can be suitably used in various applications, for example, packaging materials for foods, pharmaceuticals, and daily necessities, lid materials, paper tableware such as a paper straw, a paper napkin, a paper spoon, a paper plate, and a paper cup, outdoor industrial applications such as a wall protection material, a roofing material, a solar cell panel material, a battery packaging material, a window material, an outdoor flooring material, a lighting protection material, an automobile member, a signboard, and a sticker, decorative sheets for use in injection molding simultaneous decorating methods, and packaging materials for a liquid laundry detergent, a liquid kitchen detergent, a liquid bath detergent, a liquid bath soap, a liquid shampoo, and a liquid conditioner.

### <Packaging Material>

The laminate according to the present invention can be used as a multilayer packaging material for the purpose of protecting foods, pharmaceuticals, and the like. In the case of being used as a multilayer packaging material, the layer configuration of the laminate may change depending on the content, the use environment, and the use form. In addition, a packaging body according to the present invention may be appropriately subjected to an easy-opening treatment or provided with a resealing unit.

As an example of a specific form of the packaging material according to the present invention, for example, a packaging material obtained by forming, into a bag, a laminate including a sealant film, such as configuration examples (1) and (4) to (10) of the laminate described above, is exemplified. The laminate is folded or overlapped such that the surfaces of the inner layers thereof (the surfaces of the sealant films) face each other, and the peripheral complete portions thereof are heat-sealed to form a bag shape. Examples of a bag forming method include a heat sealing method in the form of a side surface seal type, a two-side seal type, a three-side seal type, a four-side seal type, an envelope seal type, a butt-seam seal type, a pleated seal type, a flat bottom seal type, a square bottom seal type, a gusset type, and other heat seal types. The packaging material according to the present invention can take various forms depending on the content, the use environment, and the use form. A self-supporting packaging material (standing pouch) or the like can also be used. Examples of the heat sealing method include known methods such as bar sealing, rotary roll sealing, belt sealing, impulse sealing, high-frequency sealing, and ultrasonic sealing.

A product using the packaging material according to the present invention is produced by filling the packaging material according to the present invention with the content through an opening and then heat-sealing the opening. Examples of the content for filling include foods, for example, confections such as rice crackers, bean snacks, nuts, biscuits, cookies, wafers, marshmallows, pies, soft-baked cakes, candies, and snacks, staple foods such as bread, snack noodles, instant noodles, dried noodles, pasta, aseptically packaged cooked rice, Japanese rice porridge, rice porridge, packaged rice cakes, and cereal foods, processed agricultural products such as pickles, boiled beans, natto, miso, frozen tofu, tofu, nametake mushrooms, konjac, processed wild vegetables, jams, peanut cream, salads, frozen vegetables, and processed potatoes, processed livestock products such as hams, bacon, sausages, processed chicken products, and corned beef, processed seafood products such as fish ham and sausages, fish paste products, kamaboko, seaweed, tsukudani, bonito flakes, salted fish, smoked salmon, and spicy mentaiko, fruit pulps such as peaches, mandarin oranges, pineapples, apples, pears, and cherries, vegetables such as corns, asparagus, mushrooms, onions, carrots, radishes, and potatoes, prepared foods such as frozen and chilled prepared foods, including hamburgers, meatballs, fried seafood, gyoza, and croquettes, dairy products such as butter, margarine, cheese, creams, instant cream powders, and infant formula, liquid seasonings, instant curry, and pet foods.

In addition, various packaging materials can also be used for non-foods, and examples thereof include tobacco, disposable body warmers, pharmaceuticals such as infusion packs, liquid laundry detergents, liquid kitchen detergents, liquid bath detergents, liquid bath soaps, liquid shampoos, liquid conditioners, cosmetics such as lotions and emulsions, vacuum insulating materials, and batteries.

### Examples

Hereinafter, the present invention will be described in more detail with reference to specific Synthesis Examples and Examples, but the present invention is not limited to these Examples. Note that, in the following examples, "part" and "%" represent "part by mass" and "mass%", respectively, unless otherwise specified.

### <Preparation of Polyisocyanate Composition (X)>

### (Polyisocyanate Composition (X-1))

To a reaction container equipped with a stirrer, a thermometer, a nitrogen gas inlet tube, and a condenser, 744.5 parts of hexamethylene diisocyanate (HDI) was charged, and the mixture was heated to 60°C with stirring under a nitrogen gas flow. Thereafter, 255.5 parts of polyoxypropylene sorbitol ether (SANNIX SP-750, manufactured by Sanyo Chemical Industries, Ltd.) was charged while taking care of heat generation, followed by heating to 80°C. Further, the reaction was continued at 80°C until the NCO% did not change, and 0.2 parts of butyl acid phosphate was added to complete the reaction. Next, using a thin film distillation apparatus, purification was performed at a pressure of about 0.02 Torr and a temperature of 160°C until HDI in a urethane prepolymer as a reaction product of HDI and a polyol was 0.05 mass% in the solid content, thereby obtaining a polyisocyanate composition (X-1). The NCO% of the polyisocyanate composition (X-1) was 12.1%.

### (Polyisocyanate Composition (X-2))

To a reaction container equipped with a stirrer, a thermometer, a nitrogen gas inlet tube, and a condenser, 836.1 parts of hexamethylene diisocyanate (HDI) was charged, and the mixture was heated to 60°C with stirring under a nitrogen gas flow. Thereafter, 163.9 parts of polyoxypropylene sorbitol ether (SANNIX SP-750, manufactured by Sanyo Chemical Industries, Ltd.) was charged while taking care of heat generation, followed by heating to 100°C. Further, the reaction was continued at 100°C for 10 hours, and 0.2 parts of polyphosphoric acid was added to complete the reaction. Next, using a thin film distillation apparatus, purification was performed at a pressure of about 0.02 Torr and a temperature of 160°C until HDI in a urethane prepolymer as a reaction product of HDI and a polyol was 0.05 mass% in the solid content, thereby obtaining a polyisocyanate composition (X-2). The NCO% of the polyisocyanate composition (X-2) was 12.1%.

### (Polyisocyanate Composition (X-3))

To a reaction container equipped with a stirrer, a thermometer, a nitrogen gas inlet tube, and a condenser, 712.9 parts of hexamethylene diisocyanate (HDI) was charged, and the mixture was heated to 60°C with stirring under a nitrogen gas flow. Thereafter, 186.6 parts of polyoxypropylene sorbitol ether (SANNIX SP-750, manufactured by Sanyo Chemical Industries, Ltd.), and 100.5 parts of a bifunctional polyethylene glycol having a molecular weight of 400 were charged while taking care of heat generation, followed by heating to 80°C. Further, the reaction was continued at 80°C until the NCO% did not change, and 0.2 parts of butyl acid phosphate was added to complete the reaction. Next, using a thin film distillation apparatus, purification was performed at a pressure of about 0.02 Torr and a temperature of 160°C until HDI in a urethane prepolymer as a reaction product of HDI was 0.05 mass% in the solid content, thereby obtaining a polyisocyanate composition (X-3). The NCO% of the polyisocyanate composition (X-3) was 11.2%.

### (Polyisocyanate Composition (X-4))

To a reaction container equipped with a stirrer, a thermometer, a nitrogen gas inlet tube, and a condenser, 802.8 parts of hexamethylene diisocyanate (HDI) was charged, and the mixture was heated to 60°C with stirring under a nitrogen gas flow. Thereafter, 197.2 parts of polyoxypropylene sucrose ether (SANNIX HS-209, manufactured by Sanyo Chemical Industries, Ltd.) was added while taking care of heat generation, followed by heating to 100°C. Further, the reaction was continued at 100°C for 10 hours, and 1.0 part of polyphosphoric acid was added to complete the reaction. Next, using a thin film distillation apparatus, purification was performed at a pressure of about 0.02 Torr and a temperature of 160°C until HDI in a urethane prepolymer as a reaction product of HDI was 0.05 mass% in the solid content, thereby obtaining a polyisocyanate composition (X-4). The NCO% of the polyisocyanate composition (X-4) was 12.9%.

### (Polyisocyanate Composition (X'-5)

To a reaction container equipped with a stirrer, a thermometer, a nitrogen gas inlet tube, and a condenser, 1000.0 parts of hexamethylene diisocyanate (HDI) was added, and the mixture was heated to 60°C with stirring. 0.5 parts of a quaternary ammonium salt was added dropwise thereto, and when a predetermined refractive index was reached, a deactivator was appropriately added to complete the reaction. Next, using a thin film distillation apparatus, purification was performed at a pressure of about 0.02 Torr and a temperature of 160°C until HDI in a nurate as a reaction product of HDI was 0.05 mass% in the solid content, thereby obtaining a polyisocyanate composition (X'-5). The NCO% of the polyisocyanate composition (X'-5) was 21.8%.

### (Polyisocyanate Composition (X'-6)

To a reaction container equipped with a stirrer, a thermometer, a nitrogen gas inlet tube, and a condenser, 712.9 parts of hexamethylene diisocyanate (HDI) was charged, and the mixture was heated to 60°C with stirring under a nitrogen gas flow. Thereafter, 186.6 parts of polyoxypropylene sorbitol ether (SANNIX SP-750, manufactured by Sanyo Chemical Industries, Ltd.), and 100.5 parts of a bifunctional polyethylene glycol having a molecular weight of 400 were charged while taking care of heat generation, followed by heating to 100°C. Further, the reaction was continued at 100°C for 10 hours, and 10.0 parts of polyphosphoric acid was added to complete the reaction. Next, using a thin film distillation apparatus, purification was performed at a pressure of about 0.02 Torr and a temperature of 160°C until HDI in a urethane prepolymer as a reaction product of HDI and a polyol was 0.05 mass% in the solid content, thereby obtaining a polyisocyanate composition (X'-6). The NCO% of the polyisocyanate composition (X'-6) was 11.1%.

### (Polyisocyanate Composition (X'-7)

To a reaction container equipped with a stirrer, a thermometer, a nitrogen gas inlet tube, and a condenser, 896.1 parts of hexamethylene diisocyanate (HDI) was charged, and the mixture was heated to 60°C with stirring under a nitrogen gas flow. Thereafter, 103.9 parts of polyglycerin 10 (a polymer of 10 glycerins) was added while taking care of heat generation, followed by heating to 100°C. Further, the reaction was continued at 100°C for 10 hours, and 1.0 part of polyphosphoric acid was added to complete the reaction. Next, using a thin film distillation apparatus, purification was performed at a pressure of about 0.02 Torr and a temperature of 160°C until HDI in a urethane prepolymer as a reaction product of HDI and a polyol was 0.05 mass% in the solid content, thereby obtaining a polyisocyanate composition (X'-7). The NCO% of the polyisocyanate composition (X'-7) was 15.8%.

### <Adjustment of Isocyanate Reactive Composition (Y)>

### (Isocyanate Reactive Composition (Y-1))

To a polyester reaction container equipped with a stirrer, a thermometer, a nitrogen gas inlet tube, a rectifying tube, or the like, 130 parts of terephthalic acid, 130 parts of isophthalic acid, 150 parts of adipic acid, 50 parts of dimer acid, 70 parts of ethylene glycol, 65 parts of diethylene glycol, 65 parts of neopentyl glycol, and 60 parts of 1,6-hexanediol were charged, and an ester reaction was performed at an internal temperature of 250°C. After a dehydration reaction, an intermediate polyester polyol having an acid value of 1 mgKOH/g was obtained. The intermediate was dissolved and diluted with ethyl acetate to prepare a solution having a nonvolatile content of 65 mass%. Further, 4 parts of isophorone diisocyanate was added with respect to 100 parts of the solid content of the obtained intermediate polyester polyol, followed by heating to 80°C to perform a urethanization reaction until free NO groups were substantially eliminated, thereby obtaining an isocyanate reactive composition (Y-1) having a nonvolatile content of 65 mass% and a hydroxyl value of 6.

### <Evaluation>

### (Storage Stability of Polyisocyanate Composition (X))

A glass bottle having a volume of 15 ml was filled with each of the prepared polyisocyanate compositions (X-1) to (X-4) and (X'-5) to (X'-7) and stored at room temperature for a certain period of time. The state of the polyisocyanate composition (X) after storage was evaluated in two stages according to the following criteria, and the results were summarized in Table 1.
A: no curing occurred for 30 days or longer
B: curing occurred within 30 days

**[Table 1]**

| | (X-1) | (X-2) | (X-3) | (X-4) | (X'-5) | (X'-6) | (X'-7) |
|---|---|---|---|---|---|---|---|
| Storage stability | A | A | A | A | A | A | B |

### (Preparation of Adhesive)

The polyisocyanate composition (X) and the isocyanate reactive composition (Y) were mixed according to the formulations shown in Table 2 to prepare adhesives in Examples and Comparative Examples. Note that, since the polyisocyanate composition (X'-7) was cured, it was not evaluated as an adhesive.

### (Heat Seal Strength)

A biaxially oriented nylon film having a thickness of 15 µm and a linear low density polyethylene film (LLDPE film) having a thickness of 30 µm as a sealant film were bonded to each other using a two-component curable adhesive (solid content: 3 g/m²) blended according to the combination in Examples or Comparative Examples, followed by aging at 40°C for 6 hours to obtain a laminated film.

The sealant film surfaces of laminated films were combined and subjected to a heat seal treatment at 180°C and 1 kgf/cm² for 1 second using a seal bar having a width of 1 cm, and a test piece was cut into a width of 15 mm. The peeling rate was set to 300 mm/min using a tensile tester at an ambient temperature of 25°C, and the peak of the tensile strength when both ends of the test piece were subjected to tensile measurement was defined as the heat seal strength (N/15 mm). Evaluation was performed according to the following criteria, and the results were summarized in Table 2.
A: 30 N/15 mm or more
B: less than 30 N/15 mm

### (Lamination Strength)

A biaxially oriented PET film having a thickness of 50 µm and an aluminum foil having a thickness of 30 µm were bonded to each other using a two-component curable adhesive (solid content: 3 g/m²) according to the combination in Examples or Comparative Examples, followed by aging at 40°C for 72 hours to obtain a laminated film.

A test piece having a width of 15 mm was cut from the laminated film, and the adhesive strength (N/15 mm) in 180° peeling was measured at an ambient temperature of 25°C and a peeling rate of 300 mm/min using a tensile tester. Evaluation was performed according to the following criteria, and the results were summarized in Table 2.
A: 5.0 N/15 mm or more
B: less than 5.0 N/15 mm

**[Table 2]**

| | Example 1 | Example 2 | Example 3 | Example 4 | Comparative Example 1 | Comparative Example 2 |
|---|---|---|---|---|---|---|
| Polyisocyanate composition (X-1) | 11.0 | | | | | |
| Polyisocyanate composition (X-2) | | 11.0 | | | | |
| Polyisocyanate composition (X-3) | | | 12.0 | | | |
| Polyisocyanate composition (X-4) | | | | 10.5 | | |
| Polyisocyanate composition (X'-5) | | | | | 6.0 | |
| Polyisocyanate composition (X'-6) | | | | | | 12.0 |
| Isocyanate reactive composition (Y-1) | 100.0 | 100.0 | 100.0 | 100.0 | 100.0 | 100.0 |
| Heat seal strength | A | A | A | A | B | B |
| Lamination strength | A | A | A | A | A | A |

## Claims

1. A polyisocyanate composition (X) comprising:
a polyurethane polyisocyanate (A1), which is a reaction product of hexamethylene diisocyanate and a polyol having 5 or more and 10 or less hydroxy groups; and
a phosphoric acid derivative (B), wherein
the phosphoric acid derivative (B) has a content of 10 ppm or more and 5,000 ppm or less.

2. The polyisocyanate composition (X) according to claim 1, wherein the polyol has a molecular weight of 200 g/mol or more and 3,000 g/mol or less.

3. The polyisocyanate composition (X) according to claim 1, wherein the polyol is at least one selected from a polyglycerin and a polyether polyol obtained by modifying at least one selected from xylitol, triglycerol, sorbitol, dipentaerythritol, mannitol, sucrose, and a polyglycerin with at least one selected from ethylene oxide, propylene oxide, butylene oxide, and tetrahydrofuran.

4. The polyisocyanate composition (X) according to claim 1, wherein the polyol is at least one selected from a polyglycerin and a polyether polyol obtained by modifying sorbitol with at least one selected from ethylene oxide, propylene oxide, butylene oxide, and tetrahydrofuran.

5. The polyisocyanate composition (X) according to claim 1, further comprising:
a polyurethane polyisocyanate (A2), which is a reaction product of hexamethylene diisocyanate and a bifunctional polyol.

6. The polyisocyanate composition (X) according to claim 5, wherein the bifunctional polyol is at least one selected from diethylene glycol and a polyether diol.

7. The polyisocyanate composition (X) according to claim 5, wherein the bifunctional polyol is a polyethylene glycol.

8. The polyisocyanate composition (X) according to claim 5, wherein the bifunctional polyol has a molecular weight of 100 g/mol or more and 4,000 g/mol or less.

9. The polyisocyanate composition (X) according to claim 5, wherein the polyurethane polyisocyanate (A2) has a content of 10 mass% or more and 60 mass% or less in the polyisocyanate composition (X).

10. The polyisocyanate composition (X) according to claim 1, wherein a diisocyanate monomer has a content of 0.1 mass% or less.

11. A two-component curable composition comprising:
the polyisocyanate composition (X) according to any one of claims 1 to 10; and
an isocyanate reactive composition (Y) containing an isocyanate reactive compound (C).

12. A two-component curable coating agent comprising:
the polyisocyanate composition (X) according to any one of claims 1 to 10; and
an isocyanate reactive composition (Y) containing an isocyanate reactive compound (C).

13. A two-component curable adhesive comprising:
the polyisocyanate composition (X) according to any one of claims 1 to 10; and
an isocyanate reactive composition (Y) containing an isocyanate reactive compound (C).

14. The two-component curable adhesive according to claim 13, wherein the isocyanate reactive compound (C) contains at least one selected from a polyester polyol (C1), a polyether polyol (C2), a vegetable oil polyol (C3), a polyurethane polyol (C4), a sugar alcohol (C5), an acrylic polyol (C6), an amine compound (C7), and an epoxy compound (C8).

15. A laminate comprising:
a first substrate;
a second substrate; and
an adhesive layer disposed between the first substrate and the second substrate, wherein
the adhesive layer is a cured coating film of the two-component curable adhesive according to claim 13.

16. A packaging material comprising:
the laminate according to claim 15.
